# EUROPÄISCHE PATENTSCHRIFT

(11) **EP 3 371 270 B1**
(45) Veröffentlichungstag und Bekanntmachung des Hinweises auf die Patenterteilung: **24.07.2019**
(21) Anmeldenummer: 17703364.4
(22) Anmeldetag: 31.01.2017
(51) Int. Cl.: C09J 171/02

(54) **VERNETZBARE MASSEN AUF BASIS VON ORGANYLOXYSILANTERMINIERTEN POLYMEREN**
CROSSLINKABLE MATERIALS BASED ON ORGANYL OXYSILANE-TERMINATED POLYMERS
MATIÈRES RÉTICULABLES À BASE DE POLYMÈRES À TERMINAISON ORGANYLOXYSILANE

(30) Priorität: 12.02.2016 DE 102016202196
(43) Veröffentlichungstag der Anmeldung: 12.09.2018
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2017/052059
(87) Internationale Veröffentlichungsnummer: WO 2017/137281

(56) Entgegenhaltungen:
- DE-A1-102011 081 264
- US-A1- 2015 031 806

## Beschreibung

Die Erfindung betrifft bevorzugt einkomponentige, vernetzbare Massen von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen.

So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl eine für viele Anwendungen hinreichende Reißfestigkeit als auch eine hohe Elastizität aufweisen können. Ein weiterer Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen sind vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Eine besondere Variante von Klebstoffen auf Basis alkoxysilanvernetzender Polymere ist in DE-A 10 2011 081264 beschrieben, die neben den silanvernetzenden Polymeren auch noch Phenylsiliconharze enthalten. Die entsprechenden Harzzusätze führen auch zu Klebstoffen, die nach ihrer vollständigen Aushärtung eine erheblich verbesserte Härte und Zugscherfestigkeit aufweisen.

Nachteilig an diesen Systemen ist allerdings die vergleichsweise geringe Elastizität, welche die entsprechenden harzhaltigen Klebstoffsysteme nach ihrer Aushärtung aufweisen. So liegen die Reißdehnungen bei derartigen Systemen weit unter 200%, oftmals sogar unter 50%. So positiv sich der Harzzusatz auf die Härte und Zugscherfestigkeit auswirkt, so negativ ist sein Effekt auf die Elastizität.

Dies ist zwar nicht für alle Anwendungen von Relevanz, aber insbesondere für elastische Verklebungen sind Klebstoffe mit hoher Elastizität erwünscht. Dies ist u.a. dann der Fall, wenn Materialien mit unterschiedlicher Wärmeausdehnung flächig miteinander verklebt werden, oder auch für viele Klebstoffanwendungen in der Automobilherstellung, z.B. im Karosseriebau, bei der Verklebung von Armaturen, von Schweinwerfern oder von Windschutzscheiben. Hier wird in der Regel eine Kombination von hoher Reißfestigkeit mit einer hohen Elastizität gefordert.

Klebstoffformulierungen auf Basis von bestimmten silanterminierten Polymeren, den sogenannten silanterminierten Polyurethanen, die eine derartige Eigenschaftskombination zumindest zu einem gewissen Grad aufweisen sind in EP-A 1 397 406 beschrieben. Hier wird ein bestimmter silanterminierter Polymertyp, sogenannte silanterminierte Polyurethane, gemeinsam mit Calciumcarbonat und Ruß formuliert. Allerdings sind die auf diesem Wege erreichbaren Eigenschaftsprofile mit Reißdehnungen von 250-300% und Reißfestigkeiten von 4,5-5,5 MPa für viele Anwendungen noch nicht hinreichend.

Gegenstand der Erfindung sind vernetzbare Massen enthaltend
(A) 100 Teile Verbindungen der Formel

   Y-[(CR¹₂)_{b}-SiRₐ(OR²)₃₋ₐ]ₓ (I),

   wobei
   Y einen x-wertigen, über Stickstoff, Sauerstoff, Schwefel oder Kohlenstoff gebundenen Polymerrest bedeutet,
   R gleich oder verschieden sein kann und einen einwertigen, gegebenenfalls substituierten Kohlenwasserstoffrest darstellt,
   R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   R² gleich oder verschieden sein kann und Wasserstoffatom oder einen einwertigen, gegebenenfalls substituierten Kohlenwasserstoffrest darstellt,
   x eine ganze Zahl von 1 bis 10, bevorzugt 1, 2 oder 3, besonders bevorzugt 1 oder 2, ist,
   a gleich oder verschieden sein kann und 0, 1 oder 2, bevorzugt 0 oder 1, ist und
   b gleich oder verschieden sein kann und eine ganze Zahl von 1 bis 10, bevorzugt 1, 3 oder 4, besonders bevorzugt 1 oder 3, insbesondere 1, ist,
(B) mindestens 5 Gewichtsteile Siliconharze enthaltend Einheiten der Formel

   R³_{c}(R⁴O)_{d}R⁵ₑSiO_{(4-c-d-e)/2} (II),

   wobei
   R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
   R⁴ gleich oder verschieden sein kann und Wasserstoffatom oder einen einwertigen, gegebenenfalls substituierten Kohlenwasserstoffrest bedeutet,
   R⁵ gleich oder verschieden sein kann und einen einwertigen, SiC-gebundenen, gegebenenfalls substituierten aromatischen Kohlenwasserstoffrest bedeutet,
   c 0, 1, 2 oder 3 ist,
   d 0, 1, 2 oder 3, bevorzugt 0, 1 oder 2, besonders bevorzugt 0 oder 1, ist und
   e 0, 1 oder 2, bevorzugt 0 oder 1, ist,
   mit der Maßgabe, dass die Summe aus c+d+e kleiner oder gleich 3 ist und in mindestens 40 % der Einheiten der Formel (II) die Summe c+e gleich 0 oder 1 ist, und
(C) mindestens 10 Gewichtsteile Ruß.

Der Erfindung liegt die Entdeckung zugrunde, dass durch diese neuartige Merkmalskombination eine bisher unerreichte Verquickung einer hohen Reißfestigkeit mit einer nochmals deutlich verbesserten Elastizität erreichbar ist.

Dabei war insbesondere überraschend, dass der erfindungsgemäße Zusatz von Siliconharzen (B) gegenüber den in EP 1 397 406 beschriebenen rußhaltigen Systemen zu einer deutlichen Verbesserung der Elastizität führt. Dies gilt umso mehr, als dass der Zusatz von Siliconharzen in anderen silanvernetzenden Polymersystemen, wie sie beispielsweise in DE-A 10 2011 081264 offenbart werden, zwar eine Erhöhung der Härte, gleichzeitig aber auch eine massive Verringerung der Elastizität zur Folge haben.

Ebenso überraschend war die Entdeckung, dass die erfindungsgemäßen Massen eine ganz ungewöhnlich hohe Weiterreißfestigkeit von bevorzugt über 20 N/mm, zum Teil sogar über 30 N/mm aufweisen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom und die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=0)-, -S-, -O-, -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butylrest, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen - [(CR¹₂)_{b}-SiRₐ(OR²)₃₋ₐ] an beliebigen Stellen im Polymer aufweisen, wie etwa kettenständig und/oder endständig.

Besonders bevorzugt handelt es sich bei Rest Y in Formel (I) um x-wertige, über Stickstoff, Sauerstoff, Schwefel oder Kohlenstoff gebundene organische Polymerreste, die als Polymerkette Polyurethane oder Polyoxyalkylene enthalten, insbesondere um Polyurethanreste mit endständig angebundenen Gruppen -[(CR¹₂)_{b}-SiRₐ(OR²)₃₋ₐ] oder Polyoxyalkylenreste mit endständig angebundenen Gruppen - [(CR¹₂)_{b}-SiRₐ(OR²)₃₋ₐ], wobei die Reste und Indizes die oben genannten Bedeutungen haben. Die Reste Y sind vorzugsweise linear oder weisen 1 bis 3 Verzweigungsstellen auf. Besonders bevorzugt sind sie linear.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise mittlere Molmassen Mₙ (Zahlenmittel) von 400 bis 30 000 g/mol, bevorzugt von 4 000 bis 20 000 g/mol, auf. Geeignete Verfahren zur Herstellung einer entsprechenden Komponente (A) sowie auch Beispiele für die Komponente (A) selbst sind unter anderem in EP 1 093 482 B1 (Absätze [0014]- [0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -0- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe - [(CR¹₂)_{b}-SiRₐ(OR²)₃₋ₐ] gebunden. Die Polyoxyalkylenreste Y weisen vorzugsweise mittlere Molmassen Mₙ von 4 000 bis 30 000 g/mol, bevorzugt von 8 000 bis 20 000 g/mol, auf. Geeignete Verfahren zur Herstellung einer entsprechenden Komponente (A) sowie auch Beispiele für die Komponente (A) selbst sind unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (IV),

-O-C(=O)-NH-(CR¹₂)_{b}-SiRₐ(OR²)₃₋ₐ (V)

oder

-O-(CR¹₂)_{b}-SiRₐ(OR²)₃₋ₐ (VI),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der Endgruppen
-NH-C(=O)-NR'-(CH₂)₃-Si(OCH₃)₃,
-NH-C(=O)-NR'-(CH₂)₃-Si(OC₂H₅)₃,
-O-C(=O)-NH-(CH₂)₃-Si(OCH₃)₃ oder
-O-C(=O)-NH-(CH₂)₃-Si(OC₂H₅)₃ auf,
wobei R' die oben genannte Bedeutung hat.

Sofern es sich bei den Verbindungen (A) um Polypropylenglycole handelt, was besonders bevorzugt ist, weisen diese vorzugsweise eine oder mehrere der Endgruppen
-O-(CH₂)₃-Si(CH₃)(OCH₃)₂,
-O-(CH₂)₃-Si(OCH₃)₃,
-O-C(=O)-NH-(CH₂)₃-Si(OC₂H₅)₃,
-O-C(=O)-NH-CH₂-Si(CH₃)(OC₂H₅)₂,
-O-C(=O)-NH-CH₂-Si(OCH₃)₃,
-O-C(=O)-NH-CH₂-Si(CH₃)(OCH₃)₂ oder
-O-C(=O)-NH-(CH₂)₃-Si(OCH₃)₃ auf,
wobei die beiden letztgenannten Endgruppen besonders bevorzugt werden.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 20 000 g/mol, insbesondere höchstens 19 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität wird im Rahmen der vorliegenden Erfindung nach einer Temperierung auf 23°C mit einem DV 3 P-Rotationsviskosimeter von Fa. A. Paar (Brookfieldsystme), unter Verwendung von Spindel 5 bei 2,5 UPM entsprechend der ISO 2555 bestimmt.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Massen Verbindungen (A) in Konzentrationen von höchstens 60 Gew.-%, besonders bevorzugt höchstens 40 Gew.-%, und vorzugsweise mindestens 10 Gew.-%, besonders bevorzugt mindestens 15 Gew.-%.

Bezogen auf 100 Gewichtsteile der Komponente (A) enthalten die erfindungsgemäßen Massen vorzugsweise mindestens 10 Gewichtsteile, besonders bevorzugt mindestens 15 Gewichtsteile, Komponente (B). Bezogen auf 100 Gewichtsteile der Komponente (A) enthalten die erfindungsgemäßen Massen vorzugsweise höchstens 300 Gewichtsteile, besonders bevorzugt höchstens 200 Gewichtsteile, insbesondere höchstens 100 Gewichtsteile, Komponente (B) .

Komponente (B) besteht vorzugsweise zu mindestens 90 Gew.-% aus Einheiten der Formel (II). Besonders bevorzugt besteht Komponente (B) ausschließlich aus Einheiten der Formel (II).

Beispiele für Reste R³ sind die oben für R angegebenen aliphatischen Beispiele. Es kann sich bei Rest R³ aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar.

Bevorzugt handelt es sich bei Rest R³ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R⁴ sind Wasserstoffatom und die für Rest R angegebenen Beispiele.

Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R⁵ sind die oben für R angegebenen aromatischen Reste.

Bevorzugt handelt es sich bei Rest R⁵ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden als Komponente (B) Siliconharze eingesetzt, in denen mindestens 90% aller Reste R³ für Methylrest stehen.

Bevorzugt werden als Komponente (B) Siliconharze eingesetzt, in denen mindestens 90% aller Reste R⁴ für Methyl-, Ethyl-, Propyl- oder Isopropylrest stehen.

Bevorzugt werden als Komponente (B) Siliconharze eingesetzt, in denen mindestens 90% aller Reste R⁵ für Phenylrest stehen.

Vorzugsweise werden erfindungsgemäß Siliconharze (B) eingesetzt, die mindestens 20%, besonders bevorzugt mindestens 40%, Einheiten der Formel (II) aufweisen, in denen c gleich 0 ist, jeweils bezogen auf die Gesamtzahl an Einheiten der Formel (II) .

Vorzugsweise werden Siliconharze (B) eingesetzt, die, jeweils bezogen auf die Gesamtzahl an Einheiten der Formel (II), mindestens 70%, besonders bevorzugt mindestens 80%, Einheiten der Formel (II) aufweisen, in denen d für den Wert 0 oder 1 steht.

Vorzugsweise werden als Komponente (B) Siliconharze (B1) eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 steht.

In einer besonderen Ausführungsform der Erfindung werden Siliconharze (B1) eingesetzt, in denen R⁵ für einen Phenylrest steht, und die, jeweils bezogen auf die Gesamtzahl an Einheiten der Formel (II), mindestens 70%, insbesondere mindestens 80%, Einheiten der Formel (II) aufweisen, in denen e für den Wert 1 steht, oder die ausschließlich Einheiten der Formel (II) aufweisen, in denen e gleich 1 ist.

Dieser besonderen Ausführungsform liegt die überraschende Entdeckung zugrunde, dass der Einsatz von Siliconharzen, die einen derart hohen Anteil an siliciumgebundenen Phenylgruppen aufweisen, zu Klebstoffen mit besonders hohen Elastizitäten führt.

In einer besonders bevorzugten Ausführung der Erfindung werden als Komponente (B) Siliconharze (B1) eingesetzt, die, jeweils bezogen auf die Gesamtzahl an Einheiten der Formel (II), mindestens 30%, besonders bevorzugt mindestens 60%, insbesondere mindestens 90%, Einheiten der Formel (II) aufweisen, in denen e für den Wert 1 und c für den Wert 0 stehen.

Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (Q)-Einheiten der Formeln SiO_{4/2}, Si(OR⁴)O_{3/2}, Si(OR⁴)₂O_{2/2} und Si(OR⁴)₃O_{1/2}, (T)-Einheiten der Formeln PhSiO_{3/2}, PhSi(OR⁴)O_{2/2} und PhSi(OR⁴)₂O_{1/2}, (D) -Einheiten der Formeln Me₂SiO_{2/2} und Me₂Si(OR⁴)O_{1/2} sowie (M) -Einheiten der Formel Me₃SiO_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, besonders bevorzugt für unsubstituierte Alkylreste mit 1 bis 4 Kohlenstoffatomen, stehen, wobei das Harz (B) bevorzugt (T)-Einheiten enthält und pro Mol (T)-Einheiten bevorzugt 0-2 Mol (Q)-Einheiten, 0-2 Mol (D)-Einheiten und 0-2 Mol (M)-Einheiten aufweist.

Bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (T)-Einheiten der Formeln PhSiO_{3/2}, PhSi(OR⁴)O_{2/2} und PhSi(OR⁴)₂O_{1/2} sowie (T)-Einheiten der Formeln MeSiO_{3/2}, Me-Si(OR⁴)O_{2/2} und MeSi(OR⁴)₂O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen stehen.

Weitere bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (T)-Einheiten der Formeln PhSiO_{3/2}, PhSi(OR⁴)O_{2/2} und PhSi(OR⁴)₂O_{1/2}, (T)-Einheiten der Formeln Me-SiO_{3/2}, MeSi(OR⁴)O_{2/2} und MeSi(OR⁴)₂O_{1/2} sowie (D) -Einheiten der Formeln Me₂SiO_{2/2} und Me₂Si(OR⁴)O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Besonders bevorzugte Beispiele für die erfindungsgemäß eingesetzten Siliconharze (B1) sind Organopolysiloxanharze, die zu 80%, vorzugsweise zu 90%, insbesondere ausschließlich, aus (T)-Einheiten der Formeln PhSiO_{3/2}, PhSi(OR⁴)O_{2/2} und PhSi(OR⁴)₂O_{1/2} bestehen, wobei Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, jeweils bezogen auf die Gesamtzahl an Einheiten. Wie bereits beschrieben führt der Einsatz von Siliconharzen, die einen derart hohen Anteil an siliciumgebundenen Phenylgruppen aufweisen, zu Klebstoffen mit besonders hohen Elastizitäten.

Vorzugsweise besitzen die erfindungsgemäß eingesetzten Siliconharze (B) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß eingesetzten Siliconharze (B) können bei 23°C und 1000 hPa sowohl fest als auch flüssig sein, wobei Siliconharze (B) bevorzugt flüssig sind. Vorzugsweise besitzen die Siliconharze (B) eine Viskosität von 10 bis 100 000 mPas, vorzugsweise von 50 bis 50 000 mPas, insbesondere von 100 bis 20 000 mPas.

Die erfindungsgemäß eingesetzten Siliconharze (B) besitzen vorzugsweise eine Polydispersität (M_{w/}Mₙ) von maximal 5, bevorzugt von maximal 3.

Die massenmittlere Molmasse M_{w} wird dabei ebenso wie die zahlenmittlere Molmassen Mₙ mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Siliconharze (B) können sowohl in reiner Form als auch in Form einer Mischung mit einem geeigneten Lösungsmittel (BL) eingesetzt werden.

Als Lösungsmittel (BL) können dabei sämtliche bei Raumtemperatur gegenüber den Komponenten (A) und (B) nicht reaktive Verbindungen mit einem Siedepunkt <250°C bei 1013 mbar eingesetzt werden.

Beispiele für Lösungsmittel (BL) sind Ether (z.B. Diethylether, Methyl-t-butylether, Etherderivate des Glycols, THF), Ester (z.B. Ethylacetat, Butylacetat, Glycolester), aliphatische Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, isoPropanol, Glycerin, Butanol, iso-Butanol, t-Butanol).

Viele kommerziell erhältlichen Harze (B1), wie z.B. die Harze SILRES® SY 231, SILRES® IC 231, SILRES® IC 368 oder SILRES® IC 678 der Fa. Wacker Chemie AG (D-München), sind zwar bei 23°C und 1013 hPa flüssig, enthalten herstellungsbedingt aber dennoch kleine Mengen Lösungsmittel (BL), insbesondere Toluol. So enthalten die oben genannten Harze etwa 0,1 Gew.-% Toluol bezogen auf das Gesamtgewicht des Harzes.

In einer bevorzugten Ausführung der Erfindung werden als Komponente (B) Harze (B1) eingesetzt, die weniger als 0,1 Gew.-%, bevorzugt weniger als 0,05 Gew.-%, besonders bevorzugt weniger als 0,02 Gew.-%, insbesondere weniger als 0,01 Gew.-%, aromatische Lösungsmittel (BL) enthalten. Kommerziell erhältlich Produkte sind beispielsweise GENIOSIL IC® 368 oder GENIOSIL® IC 678 der Fa. Wacker Chemie AG (D-München).

In einer besonders bevorzugten Ausführungsform der Erfindung werden als Komponente (B) Harze (B1) eingesetzt, die mit Ausnahme von Alkoholen R⁴OH weniger als 0,1 Gew.-%, bevorzugt weniger als 0,05 Gew.-%, besonders bevorzugt weniger als 0,02 Gew.-%, insbesondere weniger als 0,01 Gew.-%, Lösungsmittel (BL) enthalten, wobei R⁴ die oben genannte Bedeutung aufweist.

In einer ganz besonders bevorzugten Ausführung der Erfindung werden als Komponente (B) Harze (B1) eingesetzt, die mit Ausnahme von Alkoholen R⁴OH überhaupt keine Lösungsmittel (BL) enthalten, wobei R⁴ die oben genannte Bedeutung aufweist.

Bei den erfindungsgemäß eingesetzten Siliconharzen (B) bzw. (B1) handelt es sich um handelsübliche Produkte oder können nach in der Siliciumchemie gängigen Methoden hergestellt werden.

Vorzugsweise werden die als bevorzugt bzw. besonders bevorzugt beschriebenen Verbindungen (A) in Kombination mit Harzen (B1) und Ruß (C) in den bevorzugten Mengenverhältnissen eingesetzt.

Bei dem erfindungsgemäß eingesetzten Ruß (C) kann es sich um die unterschiedlichsten Rußtypen handeln.

Beispiele für Ruße (C) sind Ruße in allen verfügbaren und bekannten Modifikationen, wie Verbrennungsruße, wie Furnace-, Flamm-, Gas- und Kanalruße, und Spalt- bzw. Thermalruße, wie Acetylen- und Lichtbogenruße, sowie in der Fachwelt als sog. Spezialruße bekannte Ruße und Acetylenruß, wie etwa der von der Fa. SKW, Deutschland unter der Bezeichnung Acetogen UV angebotene Ruße oder Ensacko 250 Ruß der Fa. Emerys, Frankreich, Flammruß, wie etwa Durex Ruße, sowie Printex® Ruße der Fa. Evonik, Deutschland, wie etwa Printex® 55, Printex® 60, Printex® 30, Printex® 80 und Printex® 90, und Ruße mit dem Handelsnamen Experimental Black XPB 412, Nerox® 505 oder Panther® 205 der Fa. Orion (D-Frankfurt a. M.).

Erfindungsgemäß eingesetzter Ruß (C) hat eine BET-Oberfläche von bevorzugt mehr als 30 m²/g, besonders bevorzugt von mehr als 50 m²/g, insbesondere von mindestens 70 m²/g, wobei die BET-Oberfläche gemäß DIN 66131 (mit Stickstoff) bestimmt wird. Vorzugsweise hat der erfindungsgemäß eingesetzte Ruß (C) eine BET-Oberfläche von höchstens 600 m²/g, besonders bevorzugt von höchstens 400 m²/g.

Die mittlere Partikelgröße von erfindungsgemäß eingesetztem Ruß (C), gemessen nach ASTM D 3849, liegt vorzugsweise zwischen 10 und 70 nm, besonders bevorzugt zwischen 15 und 50 nm.

Die Ölzahl (Oil Absorption Number (OAN)) von erfindungsgemäß eingesetztem Ruß (C), gemessen nach ASTM D 2414, liegt vorzugsweise zwischen 40 und 180 ml/100g, besonders bevorzugt zwischen 40 und 140 ml/100g.

Da der Ruß (C) in einer feuchtigkeitshärtenden Masse eingesetzt wird, sollte er hinreichend trocken sein, oder aber vor seinem Einsatz getrocknet werden. Bevorzugt hat erfindungsgemäß eingesetzter Ruß (C) einen Feuchtigkeitsgehalt von bevorzugt höchstens 1,0 Gew.-%, besonders bevorzugt von höchstens 0,5 Gew.-%, insbesondere von höchstens 0,3 Gew.-%.

Bevorzugt handelt es sich bei dem erfindungsgemäß eingesetzten Ruß (C) um Furnace-Ruße, besonders bevorzugt um Furnace-Ruße mit einer BET-Oberfläche von 30 bis 600 m²/g und einer Ölzahl zwischen 40 und 180 ml/100g.

Bezogen auf 100 Gewichtsteile der Komponente (A) enthalten die erfindungsgemäßen Massen vorzugsweise mindestens 20 Gewichtsteile, besonders bevorzugt mindestens 30 Gewichtsteile, Komponente (C). Bezogen auf 100 Gewichtsteile der Komponente (A) enthalten die erfindungsgemäßen Massen vorzugsweise höchstens 200 Gewichtsteile, besonders bevorzugt höchstens 150 Gewichtsteile, insbesondere höchstens 100 Gewichtsteile, Komponente (C) .

Die erfindungsgemäßen Massen enthalten bezogen auf ihre Gesamtmasse vorzugsweise mindestens 5 Gew.-%, besonders bevorzugt mindestens 10 Gew.-%, insbesondere mindestens 15 Gew.-%, Komponente (C). Die erfindungsgemäßen Massen enthalten bezogen auf ihre Gesamtmasse vorzugsweise höchstens 30 Gew.-%, besonders bevorzugt höchstens 25 Gew.-%, insbesondere höchstens 20 Gew.-%, Komponente (C).

Zusätzlich zu den eingesetzten Komponenten (A), (B) und (C) können die erfindungsgemäßen Massen alle weiteren Stoffe enthalten, die auch bisher in vernetzbaren Massen eingesetzt wurden und die unterschiedlich sind zu Komponenten (A), (B) und (C), wie z.B. Stickstoff aufweisende Organosiliciumverbindung (D), Füllstoffe (E), nicht reaktive Weichmacher (F), Katalysatoren (G), Haftvermittler (H), Wasserfänger (I), Additive (J) und Zuschlagstoffe (K).

Bevorzugt handelt es sich bei gegebenenfalls eingesetzter Komponente (D) um Organosiliciumverbindungen enthaltend Einheiten der Formel

DₕSi(OR⁷)_{g}R⁶_{f}O_{(4-f-g-h)/2} (III),

worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3, bevorzugt 1, ist,
g 0, 1, 2 oder 3, bevorzugt 1, 2 oder 3, besonders bevorzugt 1 oder 3, ist und
h 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist.

Bei den erfindungsgemäß gegebenenfalls eingesetzten Organosiliciumverbindungen (D) kann es sich sowohl um Silane handeln, d.h. Verbindungen der Formel (III) mit f+g+h=4, als auch um Siloxane, d.h. Verbindungen enthaltend Einheiten der Formel (III) mit f+g+h≤3, wobei es sich bevorzugt um Silane handelt.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom oder gegebenenfalls mit Halogenatomen substituierte Kohlenwasserstoffreste mit 1 bis 18 Kohlenstoffatomen, besonders bevorzugt um Wasserstoffatom oder Kohlenwasserstoffreste mit 1 bis 10 Kohlenstoffatomen, insbesondere um Methyl- oder Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH3)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)- , cyclo-C₆H₁₁NH(CH₂)-, Phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)- , (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si (CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH (CH₂)₃-Si(OCH₃)₃, Phenyl-NH(CH₂)₃-Si(OC₂H₅)₃, Phenyl-NH (CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si (OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si (OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (D) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (D) als Haftvermittler und/oder als Wasserfänger wirken.

Die erfindungsgemäß gegebenenfalls eingesetzten Organosiliciumverbindungen (D) sind handelsübliche Produkte bzw. nach in der Chemie gängigen Verfahren herstellbar.

Falls die erfindungsgemäßen Massen Komponente (D) enthalten, handelt es sich um Mengen von bevorzugt 0,1 bis 25 Gewichtsteilen, besonders bevorzugt 0,2 bis 20 Gewichtsteilen, insbesondere 0,5 bis 15 Gewichtsteilen, jeweils bezogen auf 100 Gewichtsteile Komponente (A). Die erfindungsgemäßen Massen enthalten bevorzugt Komponente (D).

Bei den in den erfindungsgemäßen Massen gegebenenfalls eingesetzten von der Komponente (C) abweichenden Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide und Silicium-Aluminium-Mischoxide großer BET-Oberfläche; Aluminiumtrihydroxid, hohlkugelförmiger Füllstoffe, wie keramische Mikrokugel, elastische Kunststoffkugeln, Glaskugeln oder faserförmige Füllstoffe. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um Calciumcarbonat, Magnesiumcarbonat und/oder Calcium-Magnesium-Mischcarbonate, Talkum, Aluminiumtrihydroxid sowie Kieselsäure. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen von Komponente (C) abweichende Füllstoffe (E) enthalten, handelt es sich um Mengen von vorzugsweise 10 bis 1000 Gewichtsteilen, besonders bevorzugt 40 bis 500 Gewichtsteilen, insbesondere 80 bis 300 Gewichtsteilen, jeweils bezogen auf 100 Gewichtsteile Bestandteil (A). Die erfindungsgemäßen Massen enthalten bevorzugt Füllstoffe (E).

Besonders bevorzugt enthält die erfindungsgemäße Masse Calciumcarbonat, Magnesiumcarbonat und/oder Calcium-Magnesium-Mischcarbonate als Füllstoff (E1) in Mengen von 10 bis 900 Gewichtsteilen, besonders bevorzugt 40 bis 450 Gewichtsteilen, insbesondere 80 bis 280 Gewichtsteilen, jeweils bezogen auf 100 Gewichtsteile Bestandteil (A). Neben den Füllstoffen (E1) bevorzugt in den angegebenen Mengen können noch weitere von den Komponenten (C) und (E1) abweichende Füllstoffe (E2) vorhanden sein. Als Füllstoffe (E2) können dabei dieselben Materialien eingesetzt werden, die bereits als Füllstoffe (E) beschrieben worden sind, sofern diese nicht unter die Definition von (E1) fallen. Die bevorzugten Gesamtmengen an Füllstoffen (E1) und (E2) entsprechend dabei den oben angegebenen bevorzugten Mengen für Füllstoffe (E).

Als gegebenenfalls eingesetzte nicht reaktive Weichmacher (F) können alle nicht reaktiven Weichmacher eingesetzt werden, die auch bisher in vernetzbaren Organopolysiloxanmassen eingesetzt worden sind.

Bevorzugt handelt es sich bei den nicht reaktiven Weichmachern (F) organische Verbindungen ausgewählt aus den Stoffgruppen bestehend aus
- vollständig veresterten aromatischen oder aliphatischen Carbonsäuren,
- vollständig veresterten Derivaten der Phosphorsäure,
- vollständig veresterten Derivaten Sulfonsäuren,
- verzweigten oder unverzweigten gesättigten Kohlenwasserstoffen,
- Polystyrolen,
- Polybutadienen,
- Polyisobutylenen,
- Polyestern oder
- Polyethern.

Bei den erfindungsgemäß gegebenenfalls eingesetzten nicht reaktiven Weichmachern (F) handelt es sich bevorzugt um solche, die bei Temperaturen <80°C weder mit Wasser noch mit den Komponenten (A) und (B) reagieren, bei 20°C und 1013 hPa flüssig sind und einen Siedepunkt >250°C bei 1013 hPa aufweisen.

Beispiele für Carbonsäureester (F) sind Phthalsäureester, wie z.B. Dioctylphthalat, Diisooctylphthalat, Diisononylphthalat, Diisodecylphthalt und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate.

Beispiele für Polyether (F) sind Polyethylenglycole, Poly-THF und Polypropylenglycole mit Molmassen von vorzugsweise 200 bis 20 000 g/mol. Bevorzugt werden Weichmacher (F) mit Molmassen, bzw. im Falle polymerer Weichmacher mittlerer Molmassen Mₙ, von mindestens 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20000 g/mol, besonders bevorzugt von maximal 10 000 g/mol, insbesondere höchstens 8 000 g/mol.

In einer bevorzugten Ausführung der Erfindung werden als Komponente (F) phthalsäureesterfreie Weichmacher, wie perhydrierte Phthalsäureester, Ester der Trimellitsäure, Polyester oder Polyether, eingesetzt. Besonders bevorzugt handelt es sich bei Weichmacher (F) um Polyether, insbesondere um Polyethylenglycole, Poly-THF und Polypropylenglycole, ganz besonders bevorzugt um Polypropylenglycole. Die bevorzugten Polyether (F) weisen dabei Molmassen vorzugsweise zwischen 400 und 20 000 g/mol, besonders bevorzugt zwischen 800 und 12 000 g/mol, insbesondere zwischen 1 000 und 8 000 g/mol, auf.

Falls die erfindungsgemäßen Massen nicht reaktive Weichmacher (F) enthalten, handelt es sich um Mengen von vorzugsweise 5 bis 300 Gewichtsteilen, besonders bevorzugt 10 bis 200 Gewichtsteilen, insbesondere 20 bis 150 Gewichtsteilen, jeweils bezogen auf 100 Gewichtsteile Komponente (A). Die erfindungsgemäßen Massen enthalten bevorzugt Weichmacher (F).

Bei den in den erfindungsgemäßen Massen gegebenenfalls eingesetzten Katalysatoren (G) kann es sich um beliebige, bisher bekannte Katalysatoren für durch Silankondensation härtende Massen handeln.

Beispiele für metallhaltige Härtungskatalysatoren (G) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (G) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (G) können saure Verbindungen eingesetzt werden, wie Phosphorsäure und ihre teilveresterten Derivate, Toluolsulfonsäure, Schwefelsäure, Salpetersäure oder auch organische Carbonsäuren, z.B. Essigsäure und Benzoesäure.

Falls die erfindungsgemäßen Massen Katalysatoren (G) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführung der Erfindung handelt es sich bei den gegebenenfalls eingesetzten Katalysatoren (G) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

Bei den erfindungsgemäßen Massen kann vorzugsweise dann auf metallhaltige Katalysatoren (G), und insbesondere auf Zinn enthaltende Katalysatoren, verzichtet werden, wenn die Komponente (A) ganz oder zumindest teilweise, d.h. zu mindestens 10 Gew.-%, vorzugsweise zu mindestens 20 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen gegebenenfalls eingesetzten Haftvermittlern (H) kann es sich um beliebige, bisher für durch Silankondensation härtende Systeme beschriebene Haftvermittler handeln.

Beispiele für Haftvermittler (H) sind Epoxysilane, wie Glycidoxypropyltrimethoxysilane, Glycidoxypropyl-methyldimethoxysilan, Glycidoxypropyltriethoxysilan oder Glycidoxypropylmethyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethmethyldimethoxysilane, Acryloxymethyl-triethoxysilan und Acryloxymethyl-methyldiethoxysilan sowie deren Teilkondensate.

Falls die erfindungsgemäßen Massen Haftvermittler (H) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse.

Bei den in den erfindungsgemäßen Massen gegebenenfalls eingesetzten Wasserfängern (I) kann es sich um beliebige, für durch Silankondensation härtende Systeme beschriebene Wasserfänger handeln.

Beispiele für Wasserfänger (I) sind Silane wie Vinyltrimethoxysilan, Vinyltriethoxysilan, Vinylmethyldimethoxysilan, Tetraethoxysilan, O-Methylcarbamatomethyl-methyldimethoxysilan, 0-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan, wobei Vinyltrimethoxysilan bevorzugt ist.

Falls die erfindungsgemäßen Massen Wasserfänger (I) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse. Die erfindungsgemäßen Massen enthalten bevorzugt Wasserfänger (I).

Bei den in den erfindungsgemäßen Massen gegebenenfalls eingesetzten Additiven (J) kann es sich um beliebige, bisher bekannte für silanvernetzende Systeme typische Additive handeln.

Bei den erfindungsgemäß gegebenenfalls eingesetzten Additiven (J) handelt es sich von den bisher genannten Komponenten abweichende Verbindungen, bevorzugt um Antioxidantien, UV-Stabilisatoren, wie z.B. sog. HALS-Verbindungen, Fungizide, handelsübliche Entschäumer, z.B. der Firma BYK (D-Wesel), handelsübliche Netzmittel, z.B. der Firma BYK (D-Wesel)und Pigmente.

Falls die erfindungsgemäßen Massen Additive (J) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen enthalten bevorzugt Additive (J).

Bei den erfindungsgemäß gegebenenfalls eingesetzten Zuschlagsstoffen (K) handelt es sich bevorzugt um Tetraalkoxysilane, z.B. Tetraethoxysilan, und/oder deren Teilkondensate, Reaktivweichmacher, Rheologieadditive, Flammschutzmittel oder organische Lösungsmittel.

Bevorzugte Reaktivweichmacher (K) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (K) handelt es sich bevorzugt um bei Raumtemperatur feste Polyamidwachse, hydrierte Rizinusöle oder Stearate.

Als Flammschutzmittel (K) können alle typischen Flammschutzmittel eingesetzt werden, wie sie für Kleb- und Dichtstoffsysteme typisch sind, insbesondere halogenierte Verbindungen und Derivate, insbesondere (Teil-)Ester, der Phosphorsäure.

Beispiele für organische Lösungsmittel (K) sind die bereits oben als Lösungsmittel (BL) genannten Verbindungen, bevorzugt Alkohole.

Den erfindungsgemäßen Massen werden vorzugsweise keine organischen Lösungsmittel (K) zugesetzt.

Falls die erfindungsgemäßen Massen eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Massen handelt es sich bevorzugt um solche enthaltend
(A) 100 Gewichtsteile Verbindungen der Formel (I),
(B) 5-300 Gewichtsteile Siliconharze enthaltend Einheiten der Formel (II), wobei es sich vorzugsweise um Harze (B1) handelt,
(C) 10-200 Gewichtsteile Ruß,
(D) 0,1-25 Gewichtsteile Organosiliciumverbindungen enthaltend Einheiten der Formel (III),
(E) 10-1000 Gewichtsteile Füllstoffe,
   gegebenenfalls (F) Weichmacher,
   gegebenenfalls (G) Katalysatoren,
   gegebenenfalls (H) Haftvermittler,
   gegebenenfalls (I) Wasserfänger,
   gegebenenfalls (J) Additive und
   gegebenenfalls (K) Zuschlagstoffe.

Besonders bevorzugt handelt es sich bei den erfindungsgemäßen Massen um solche enthaltend
(A) 100 Gewichtsteile Verbindungen der Formel (I),
(B) 10-200 Gewichtsteile Siliconharze enthaltend Einheiten der Formel (II), wobei es sich vorzugsweise um Harze (B1) handelt,
(C) 20-200 Teile Ruß,
(D) 0,1-25 Gewichtsteile Organosiliciumverbindungen enthaltend Einheiten der Formel (III),
(E1) 10-900 Gewichtsteile Calciumcarbonat, Magnesiumcarbonat und/oder Calcium-Magnesium-Mischcarbonate,
   gegebenenfalls (E2) von den Komponenten (C) und (E1) abweichende Füllstoffe,
   gegebenenfalls (F) Weichmacher,
   gegebenenfalls (G) Katalysatoren,
   gegebenenfalls (H) Haftvermittler,
   gegebenenfalls (I) Wasserfänger,
   gegebenenfalls (J) Additive und
   gegebenenfalls (K) Zuschlagstoffe.

Insbesondere bevorzugt handelt es sich bei den erfindungsgemäßen Massen um solche enthaltend
(A) 100 Gewichtsteile Verbindungen der Formel (I) mit Y gleich einem x-wertigen, über Stickstoff, Sauerstoff, Schwefel oder Kohlenstoff gebundenen Polymerrest, der als Polymerkette Polyurethane oder Polyoxyalkylene enthält,
(B) 10-200 Gewichtsteile Siliconharze enthaltend Einheiten der Formel (II), wobei es sich vorzugsweise um Harze (B1) handelt,
(C) 20-200 Gewichtsteile Ruß,
(D) 0,1-25 Gewichtsteile Organosiliciumverbindungen enthaltend Einheiten der Formel (III),
(E1)10-450 Gewichtsteile Calciumcarbonat, Magnesiumcarbonat und/oder Calcium-Magnesium-Mischcarbonate,
(F) 10-200 Gewichtsteile Weichmacher,
   gegebenenfalls (E2) von den Komponenten (C) und (E1) abweichende Füllstoffe,
   gegebenenfalls (G) Katalysatoren,
   gegebenenfalls (H) Haftvermittler,
   gegebenenfalls (I) Wasserfänger,
   gegebenenfalls (J) Additive und
   gegebenenfalls (K) Zuschlagstoffe.

Bei einer weiteren besonders bevorzugten Ausführungsform handelt es sich bei den erfindungsgemäßen Massen um solche enthaltend
(A) 100 Gewichtsteile Verbindungen der Formel (I) mit Y gleich einem x-wertigen, über Stickstoff, Sauerstoff, Schwefel oder Kohlenstoff gebundenen Polymerrest, der als Polymerkette Polyurethane oder Polyoxyalkylene enthält,
(B) 10-200 Gewichtsteile Siliconharze bestehend aus Einheiten der Formel (II), in denen R⁵ für einen Phenylrest steht, und die, jeweils bezogen auf die Gesamtzahl an Einheiten der Formel (II), mindestens 70% Einheiten der Formel (II) aufweisen, in denen e für den Wert 1 steht,
(C) 20-200 Teile Furnace-Ruß,
(D) 0,1-25 Gewichtsteile Silane der Formel (III),
(E1) 10-900 Gewichtsteile Calciumcarbonat, Magnesiumcarbonat und/oder Calcium-Magnesium-Mischcarbonate,
   gegebenenfalls (E2) von den Komponenten (C) und (E1) abweichende Füllstoffe,
   gegebenenfalls (F) Weichmacher,
   gegebenenfalls (G) Katalysatoren,
   gegebenenfalls (H) Haftvermittler,
   gegebenenfalls (I) Wasserfänger,
   gegebenenfalls (J) Additive und
   gegebenenfalls (K) Zuschlagstoffe.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bevorzugt enthalten die erfindungsgemäßen Massen keine über die Komponenten (A) bis (K) hinausgehende Komponenten.

Bei den erfindungsgemäßen Massen handelt es sich bevorzugt um zähflüssig bis pastöse Massen mit Viskositäten von bevorzugt 500 bis 3 000 000 mPas, besonders bevorzugt von 1 500 bis 1 500 000 mPas, jeweils bei 25°C.

Die Herstellung der erfindungsgemäßen Massen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen handelt es sich bevorzugt um einkomponentige vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Die erfindungsgemäßen Massen sind bei Ausschluss von Wasser lagerfähig und bei Zutritt von Wasser vernetzbar.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5°C bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Vorzugsweise haben die erfindungsgemäßen Formkörper eine Reißfestigkeit von mindestens 4,0 MPa, besonders bevorzugt von mindestens 4,5 MPa, insbesondere von mindestens 5 MPa, jeweils gemessen nach DIN EN 53504-S1.

Vorzugsweise weisen die erfindungsgemäßen Formkörper eine Reißdehnung von mindestens 300%, besonders bevorzugt von mindestens 350%, insbesondere von mindestens 400%, auf, jeweils gemessen nach DIN EN 53504-S1.

Vorzugsweise besitzen die erfindungsgemäßen Formkörper eine Weiterreißfestigkeit von mindestens 20 N/mm, besonders bevorzugt von mindestens 25 N/mm, jeweils gemessen nach der ASTM D 624 B.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird.

Beispiele hierfür sind Beschichtungen, Verguss, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Beim erfindungsgemäßen Verfahren zur Herstellung von Materialverbunden kann die erfindungsgemäße Masse auch zwischen mindestens zwei gleichen oder verschiedenen Substraten vulkanisiert werden, wie z.B. bei Verklebungen, Laminaten oder Einkapselungen.

Beispiele für Substrate, die erfindungsgemäß verklebt oder abgedichtet werden können, sind Kunststoffe inkl. PVC, Metalle, Beton, Holz, mineralische Untergründe, Glas, Keramik und lackierte Oberflächen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise zum Abdichten und flexiblen Verkleben von metallischen Bauteilen. Die erfindungsgemäßen Massen können somit als Montageklebstoffe, für den Automobilbau und für die Bus-, LKW- und Schienenfahrzeugherstellung verwenden werden. Weiterhin eignen sie sich zum Fensterbau, insbesondere von Dachfenstern, strukturellen Glasverklebungen oder zur Herstellung von Photovoltaikelementen, Vitrinen, sowie z.B. zur Herstellung von Schutzüberzügen oder von Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass sie leicht zu verarbeiten sind.

Sofern nicht anders angegeben, werden sämtliche Arbeitsschritte in den nachstehenden Beispielen bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Die Vernetzung der Massen wird bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiele

**Polymer 1:** silanterminiertes Polypropylenglycol mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL® STP-E35 bei der Fa. Wacker Chemie AG, D-München);
Ruß 1: Ruß mit einer BET-Oberfläche von ca. 105 m²/g, einer mittleren Partikelgröße von ca. 25 nm und einer Ölzahl von ca. 49 ml/100g (käuflich erhältlich unter der Bezeichnung Printex® 55 bei der Fa. Orion, D-Frankfurt a. M.);
**Ruß 2:** Ruß mit einer BET-Oberfläche von ca. 120 m²/g, einer mittleren Partikelgröße von ca. 21 nm und einer Ölzahl von ca. 118 ml/100g (käuflich erhältlich unter der Bezeichnung Printex® 60 bei der Fa. Orion, D-Frankfurt a. M.).

### Herstellung von Phenylsiliconharz

In einem 2 1-Vierhalskolben mit Tropftrichter, Liebigkühler, KPG-Rührer und Thermometer werden 1000 g Phenyltrimethoxysilan bei Raumtemperatur vorgelegt und unter Rührung mit 20 g einer 20%-igen wässrigen Salzsäure versetzt. Anschließend wird auf eine Temperatur von 65-68°C erwärmt, bis ein schwacher Rückfluss einsetzt. Dann wird unter Rückfluss eine Mischung aus 74 g Wasser und 40 g Methanol gleichmäßig innerhalb von 30 min zugegeben. Nach Ende der Zugabe wird für weitere 10 min unter Rückfluss gerührt und danach auf Raumtemperatur abgekühlt.

Die Reaktionsmischung wird für ca. 16 h bei Raumtemperatur stehen gelassen, anschließend werden 60 g Natriumhydrogencarbonat unter Rührung zugeben, es wird für 30 min gerührt, dann wird der entstandene Feststoff durch Filtration abgetrennt. Zuletzt werden die Leichtsieder (im Wesentlichen Methanol) destillativ entfernt. Dabei werden zunächst ca. 80-90% der abzunehmenden Destillatmenge bei 1013 mbar und einer Temperatur von 120°C entfernt, anschließend wird der Druck auf 10 mbar reduziert und während der folgenden 15-20 min werden die verbleibenden leichtsiedenden Reste abdestilliert.

Es wird ein Phenylsiliconharz mit einer mittleren Molmasse Mn von 1200 g/mol, einer Viskosität von 90 mPas bei 23°C und einem Gehalt an Methoxygruppen von 18% bezogen auf die gesamte Harzmasse erhalten.

### Beispiel 1

143,6 g Polymer 1 werden in einem Laborplanetenmischer der Fa. PC-Laborsystem, ausgestattet mit zwei Balkenmischern, bei ca. 25°C mit 50,4 g des oben hergestellten Phenylsiliconharzes, 72,4 g Diisodecylphthalat als Weichmacher und 4,8 g Vinyltrimethoxysilan für 2 Minuten bei 200 U/min homogenisiert. Danach werden 60,8 g einer Kreide mit einer BET-Oberfläche von 15 m²/g und einem d50-Wert von 0,45 µm (käuflich erhältlich unter der Bezeichnung "Socal U1S2" bei der Fa. Solvay) und 62,8 g Ruß 1 unter Rühren eine Minute bei 600 U/min aufgeschlossen. Nach Einarbeitung von Ruß und Kreide werden 4,8 g N-(2-Aminoethyl)-Aminopropyl-trimethoxysilan und 0,4 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Vergleichsbeispiel 1 (V1)

Es wird so vorgegangen wie bei Beispiel 1, nur dass anstelle von 143,6 g Polymer 1 und 50,4 g Phenylsiliconharz 194 g Polymer 1 eingesetzt werden.

### Beispiel 2

Es wird so vorgegangen wie bei Beispiel 1, nur dass anstelle von 62,8 g Ruß 1 dieselbe Menge Ruß 2 eingesetzt wird.

### Vergleichsbeispiel 2 (V2)

Es wird so vorgegangen wie bei Beispiel 2, nur dass anstelle von 143,6 g Polymer 1 und 50,4 g Phenylsiliconharz 194 g Polymer 1 eingesetzt werden.

### Beispiel 3

Die in den Beispielen 1 und 2 sowie in den Vergleichsbeispielen 1 und 2 (V1 und V2) erhaltenen Massen werden vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Mechanische Eigenschaften

Die Massen wurden jeweils auf ausgefrästen Teflonplatten mit 2 mm Tiefe ausgestrichen und 2 Wochen bei 23°C, 50 rel. Luftfeuchte gehärtet.

Die Shore-A-Härte wird gemäß DIN EN 53505 bestimmt.
Die Reißfestigkeit wird gemäß DIN EN 53504-S1 bestimmt.

Die Reißdehnung wird gemäß DIN EN 53504-S1 bestimmt.
Das 100%-Modul wird gemäß DIN EN 53504-S1 bestimmt.
Die Weiterreißfestigkeit wird gemäß ASTM D 624 B bestimmt.

**Tabelle 1**

| **Masse aus Beispiel** | **1** | **V1** | **2** | **V2** |
|---|---|---|---|---|
| Ruß [Gew.-%] | 15,7 | 15,7 | 15,7 | 15,7 |
| Phenylsiliconharz [Gew.-%] | 12,6 | 0, 0 | 12,6 | 0, 0 |
| HBZ [min] | 150 | 22 | 55 | 11 |
| Shore-A-Härte | 57 | 52 | 66 | 57 |
| Reißfestigkeit [N/mm²] | 4,6 | 3,0 | 6,8 | 4,8 |
| Reißdehnung [%] | 362 | 213 | 406 | 238 |
| 100%-Modul [MPa] | 1,9 | 1,4 | 2,6 | 2,1 |
| Weiterreißfestigkeit [N/mm] | 26,6 | 13,0 | 29,4 | 17,9 |

### Beispiel 4

103,6 g Polymer 1 werden in einem Laborplanetenmischer der Fa. PC-Laborsystem, ausgestattet mit zwei Balkenmischern, bei ca. 25°C mit 36,4 g des oben hergestellten Phenylsiliconharzes, 59,2 g eines Polypropylenglycols mit einer mittleren Molmasse Mₙ von 2000 g/mol, 8,0 g Vinyltrimethoxysilan und 2,0 g einer Stabilisatormischung (unter der Bezeichnung TINUVIN® B 75 bei der Fa. BASF AG (Deutschland) käuflich erhältliche Mischung aus 20% Irganox® 1135 (CAS-Nr. 125643-61-0), 40 % Tinuvin® 571 (CAS-NR. 23328-53-2) und 40 % Tinuvin® 765 (CAS-NR. 41556-26-7)) für 2 Minuten bei 200 U/min homogenisiert. Danach werden 120,0 g einer mit Fettsäure beschichteten gefällten Kreide mit einem mittleren Teilchendurchmesser (D50%) von ca. 0,07 µm (käuflich erhältlich unter der Bezeichnung Hakuenka® CCR S10 bei der Fa. Shiraishi Omya GmbH, AT-Gummern) und 66,0 g Ruß 1 unter Rühren eine Minute bei 600 U/min aufgeschlossen. Nach Einarbeitung von Ruß und Kreide werden 4,0 g N-(2-Aminoethyl)-Aminopropyl-trimethoxysilan und 0,8 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Beispiel 5

Es wird so vorgegangen wie bei Beispiel 4, nur dass anstelle von 66,0 g Ruß 1 dieselbe Menge Ruß 2 eingesetzt wird.

### Beispiel 6

81,8 g Polymer 1 werden in einem Laborplanetenmischer der Fa. PC-Laborsystem, ausgestattet mit zwei Balkenmischern, bei ca. 25°C mit 18,2 g des oben hergestellten Phenylsiliconharzes, 99,2 g eines Polypropylenglycols mit einer mittleren Molmasse Mₙ von 2000 g/mol, 8,0 g Vinyltrimethoxysilan und 2,0 g einer Stabilisatormischung (unter der Bezeichnung TINUVIN® B 75 bei der Fa. BASF AG (Deutschland) käuflich erhältliche Mischung aus 20% Irganox® 1135 (CAS-Nr. 125643-61-0), 40 % Tinuvin® 571 (CAS-NR. 23328-53-2) und 40 % Tinuvin® 765 (CAS-NR. 41556-26-7)) für 2 Minuten bei 200 U/min homogenisiert. Danach werden 120,0 g einer mit Fettsäure beschichteten gefällten Kreide mit einem mittleren Teilchendurchmesser (D50%) von ca. 0,07 µm (käuflich erhältlich unter der Bezeichnung Hakuenka® CCR S10 bei der Fa. Shiraishi Omya GmbH, AT-Gummern) und 66,0 g Ruß 1 unter Rühren eine Minute bei 600 U/min aufgeschlossen. Nach Einarbeitung von Ruß und Kreide werden 4,0 g *N*-(2-Aminoethyl)-Aminopropyl-trimethoxysilan und 0,8 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Beispiel 7

Es wird so vorgegangen wie bei Beispiel 6, nur dass anstelle von 66,0 g Ruß 1 dieselbe Menge Ruß 2 eingesetzt wird.

### Beispiel 8

Die in den Beispielen 4 bis 7 erhaltenen Massen werden vernetzen gelassen und hinsichtlich ihrer Hautbildung und ihrer mechanischen Eigenschaften nach den in Beispiel 3 angegebenen Methoden untersucht. Die Ergebnisse finden sich in Tabelle 2.

**Tabelle 2**

| **Masse aus Beispiel** | **4** | **5** | **6** | **7** |
|---|---|---|---|---|
| HBZ [min] | 58 | 25 | 106 | 62 |
| Shore-A-Härte | 67 | 74 | 54 | 62 |
| Reißdehnung [%] | 502 | 285 | 549 | 434 |
| Reißfestigkeit [N/mm²] | 5,9 | 5,6 | 4,3 | 4,9 |
| 100%-Modul [MPa] | 2,4 | 3,5 | 1,3 | 2,1 |
| Weiterreißfestigkeit [N/mm] | 42,9 | 28,5 | 31,2 | 36.5 |

## Patentansprüche

1. Vernetzbare Massen enthaltend
(A) 100 Gewichtsteile Verbindungen der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) mindestens 5 Gewichtsteile Siliconharze enthaltend Einheiten der Formel
R³_{c}(R⁴O)_{d}R⁵ₑSiO_{(4-c-d-e)/2} (II),
wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3 ist und
e 0, 1 oder 2 ist,
mit der Maßgabe, dass die Summe aus c+d+e kleiner oder gleich 3 ist und in mindestens 40 % der Einheiten der Formel (II) die Summe c+e gleich 0 oder 1 ist, und
(C) mindestens 10 Gewichtsteile Ruß.

2. Vernetzbare Massen gemäß Anspruch 1 enthaltend
(A) 100 Gewichtsteile Verbindungen der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet, der als Polymerkette Polyurethane oder Polyoxyalkylene enthält,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) mindestens 5 Gewichtsteile Siliconharze enthaltend Einheiten der Formel
R³_{c}(R⁴O)_{d}R⁵ₑSiO_{(4-c-d-e)/2} (II),
wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3 ist und
e 0, 1 oder 2 ist,
mit der Maßgabe, dass die Summe aus c+d+e kleiner oder gleich 3 ist und in mindestens 40 % der Einheiten der Formel (II) die Summe c+e gleich 0 oder 1 ist, und
(C) mindestens 10 Gewichtsteile Ruß.

3. Vernetzbare Massen gemäß Anspruch 1 oder 2, **dadurch gekennzeichnet, dass** als Komponente (B) Siliconharze (B1) eingesetzt werden, die, bezogen auf die Gesamtzahl an Einheiten der Formel (II), mindestens 30% Einheiten der Formel (II) aufweisen, in denen e für den Wert 1 und c für den Wert 0 stehen.

4. Vernetzbare Massen gemäß einem oder mehreren der Ansprüche 1 bis 3, **dadurch gekennzeichnet, dass** es sich bei Komponente (C) um Furnace-Ruße handelt.

5. Vernetzbare Massen gemäß einem oder mehreren der Ansprüche 1 bis 4, **dadurch gekennzeichnet, dass** es sich bei Komponente (C) um Furnace-Ruße mit einer BET-Oberfläche, bestimmt mit Stickstoff gemäß DIN 66131, von 30 bis 600 m²/g und einer Ölzahl, bestimmt gemäß ASTM D 2414, zwischen 40 und 180 ml/100g handelt.

6. Vernetzbare Massen gemäß einem oder mehreren der Ansprüche 1 bis 5, **dadurch gekennzeichnet, dass** es sich um solche handelt enthaltend
(A) 100 Gewichtsteile Verbindungen der Formel (I),
(B) 5-300 Gewichtsteile Siliconharze enthaltend Einheiten der Formel (II),
(C) 10-200 Gewichtsteile Ruß,
(D) 0,1-25 Gewichtsteile Organosiliciumverbindungen enthaltend Einheiten der Formel
DₕSi(OR⁷)_{g}R⁶_{f}O_{(4-f-g-h)/2} (III),
worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3 ist,
g 0, 1, 2 oder 3 ist und
h 0, 1, 2, 3 oder 4 ist,
mit der Maßgabe, dass die Summe aus f+g+h kleiner oder gleich 4 ist und pro Molekül mindestens ein Rest D anwesend ist,
(E) 10-1000 Gewichtsteile Füllstoffe,
gegebenenfalls (F) Weichmacher,
gegebenenfalls (G) Katalysatoren,
gegebenenfalls (H) Haftvermittler,
gegebenenfalls (I) Wasserfänger,
gegebenenfalls (J) Additive und
gegebenenfalls (K) Zuschlagstoffe.

7. Vernetzbare Massen gemäß einem oder mehreren der Ansprüche 1 bis 6, **dadurch gekennzeichnet, dass** es sich um solche handelt enthaltend
(A) 100 Gewichtsteile Verbindungen der Formel (I) mit Y gleich einem x-wertigen, über Stickstoff, Sauerstoff, Schwefel oder Kohlenstoff gebundenen Polymerrest, der als Polymerkette Polyurethane oder Polyoxyalkylene enthält,
(B) 10-200 Gewichtsteile Siliconharze enthaltend Einheiten der Formel (II), in denen R⁵ für einen Phenylrest steht, und die, jeweils bezogen auf die Gesamtzahl an Einheiten der Formel (II), mindestens 70% Einheiten der Formel (II) aufweisen, in denen e für den Wert 1 steht,
(C) 20-200 Teile Furnace-Ruß,
(D) 0,1-25 Gewichtsteile Silane der Formel (III),
(E1) 10-900 Gewichtsteile Calciumcarbonat, Magnesiumcarbonat und/oder Calcium-Magnesium-Mischcarbonate,
gegebenenfalls (E2) von den Komponenten (C) und (E1) abweichende Füllstoffe,
gegebenenfalls (F) Weichmacher,
gegebenenfalls (G) Katalysatoren,
gegebenenfalls (H) Haftvermittler,
gegebenenfalls (I) Wasserfänger,
gegebenenfalls (J) Additive und
gegebenenfalls (K) Zuschlagstoffe.

8. Verfahren zur Herstellung der Masse gemäß einem oder mehreren der Ansprüche 1 bis 7 durch Mischen der einzelnen Komponenten in beliebiger Reihenfolge.

9. Formkörper, hergestellt durch Vernetzung der Massen gemäß einem oder mehreren der Ansprüche 1 bis 7.

10. Verfahren zur Herstellung von Materialverbunden, bei denen die Masse gemäß einem oder mehreren der Ansprüche 1 bis 7 auf mindestens ein Substrat aufgebracht und anschließend vernetzen gelassen wird.

## Claims

1. Crosslinkable compositions comprising
(A) 100 parts by weight of compounds of the formula
Y-[(CR¹₂)_{b}-SiRₐ(OR²)₃₋ₐ]ₓ (I),
where
Y denotes an x-valent polymer radical bonded via nitrogen, oxygen, sulfur or carbon,
R may be identical or different and represents a monovalent, optionally substituted hydrocarbyl radical,
R¹ may be identical or different and represents hydrogen atom or a monovalent, optionally substituted hydrocarbyl radical which may be attached to the carbon atom via nitrogen, phosphorus, oxygen, sulfur or carbonyl group,
R² may be identical or different and represents hydrogen atom or a monovalent, optionally substituted hydrocarbyl radical,
x is an integer from 1 to 10,
a may be identical or different and is 0, 1 or 2, and
b may be identical or different and is an integer from 1 to 10,
(B) at least 5 parts by weight of silicone resins comprising units of the formula
R³_{c}(R⁴O)_{d}R⁵ₑSiO_{(4-c-d-e)/2} (II),
where
R³ may be identical or different and denotes hydrogen atom, a monovalent, SiC-bonded, optionally substituted aliphatic hydrocarbyl radical or a divalent, optionally substituted, aliphatic hydrocarbyl radical which bridges two units of the formula (II),
R⁴ may be identical or different and represents hydrogen atom or a monovalent, optionally substituted hydrocarbyl radical,
R⁵ may be identical or different and represents a monovalent, SiC-bonded, optionally substituted aromatic hydrocarbyl radical,
c is 0, 1, 2 or 3,
d is 0, 1, 2 or 3, and
e is 0, 1 or 2,
with the proviso that the sum of c+d+e is less than or equal to 3 and in at least 40% of the units of the formula (II) the sum c+e is 0 or 1, and
(C) at least 10 parts by weight of carbon black.

2. Crosslinkable compositions according to Claim 1, comprising
(A) 100 parts by weight of compounds of the formula
Y-[(CR¹₂)_{b}-SiRₐ(OR²)₃₋ₐ]ₓ (I),
where
Y denotes an x-valent polymer radical bonded via nitrogen, oxygen, sulfur or carbon and comprising polyurethanes or polyoxyalkylenes as its polymer chain,
R may be identical or different and represents a monovalent, optionally substituted hydrocarbyl radical,
R¹ may be identical or different and represents hydrogen atom or a monovalent, optionally substituted hydrocarbyl radical which may be attached to the carbon atom via nitrogen, phosphorus, oxygen, sulfur or carbonyl group,
R² may be identical or different and represents hydrogen atom or a monovalent, optionally substituted hydrocarbyl radical,
x is an integer from 1 to 10,
a may be identical or different and is 0, 1 or 2, and
b may be identical or different and is an integer from 1 to 10,
(B) at least 5 parts by weight of silicone resins comprising units of the formula
R³_{c}(R⁴O)_{d}R⁵ₑSiO_{(4-c-d-e)/2} (II),
where
R³ may be identical or different and denotes hydrogen atom, a monovalent, SiC-bonded, optionally substituted aliphatic hydrocarbyl radical or a divalent, optionally substituted, aliphatic hydrocarbyl radical which bridges two units of the formula (II),
R⁴ may be identical or different and represents hydrogen atom or a monovalent, optionally substituted hydrocarbyl radical,
R⁵ may be identical or different and represents a monovalent, SiC-bonded, optionally substituted aromatic hydrocarbyl radical,
c is 0, 1, 2 or 3,
d is 0, 1, 2 or 3, and
e is 0, 1 or 2,
with the proviso that the sum of c+d+e is less than or equal to 3 an in at least 40% of the units of the formula (II) the sum c+e is 0 or 1, and
(C) at least 10 parts by weight of carbon black.

3. Crosslinkable compositions according to Claim 1 or 2, **characterized in that** use is made as component (B) of silicone resins (B1) which, based on the total number of units of the formula (II), have at least 30% of units of the formula (II) in which the value of e is 1 and the value of c is 0.

4. Crosslinkable compositions according to one or more of Claims 1 to 3, **characterized in that** component (C) comprises furnace blacks.

5. Crosslinkable compositions according to one or more of Claims 1 to 4, **characterized in that** component (C) comprises furnace blacks having a BET surface area, determined with nitrogen according to DIN 66131, of 30 to 600 m²/g and an oil number, determined according to ASTM D 2414, of between 40 and 180 ml/100 g.

6. Crosslinkable compositions according to one or more of Claims 1 to 5, **characterized in that** they are those comprising
(A) 100 parts by weight of compounds of the formula (I),
(B) 5-300 parts by weight of silicone resins comprising units of the formula (II),
(C) 10-200 parts by weight of carbon black,
(D) 0.1-25 parts by weight of organosilicon compounds comprising units of the formula
DₕSi(OR⁷)_{g}R⁶_{f}O_{(4-f-g-h)/2} (III),
in which
R⁶ may be identical or different and denotes a monovalent, optionally substituted, SiC-bonded, nitrogen-free organic radical,
R⁷ may be identical or different and denotes hydrogen atom or optionally substituted hydrocarbyl radicals,
D may be identical or different and denotes a monovalent, SiC-bonded radical having at least one nitrogen atom not bonded to a carbonyl group (C=O)
f is 0, 1, 2 or 3,
g is 0, 1, 2 or 3, and
h is 0, 1, 2, 3 or 4,
with the proviso that the sum of f+g+h is less than or equal to 4 and there is at least one radical D present per molecule,
(E) 10-1000 parts by weight of fillers,
optionally (F) plasticizers,
optionally (G) catalysts,
optionally (H) adhesion promoters,
optionally (I) water scavengers,
optionally (J) additives, and
optionally (K) adjuvants.

7. Crosslinkable compositions according to one or more of Claims 1 to 6, **characterized in that** they are those comprising
(A) 100 parts by weight of compounds of the formula (I) where Y is an x-valent polymer radical which is bonded via nitrogen, oxygen, sulfur or carbon and which comprises polyurethanes or polyoxyalkylenes as its polymer chain,
(B) 10-200 parts by weight of silicone resins comprising units of the formula (II) in which R⁵ is a phenyl radical, and which, based in each case on the total number of units of the formula (II), have at least 70% of units of the formula (II) in which e has a value of 1,
(C) 20-200 parts by weight of furnace black,
(D) 0.1-25 parts by weight of silanes of the formula (III),
(E1) 10-900 parts by weight of calcium carbonate, magnesium carbonate and/or mixed calcium magnesium carbonates,
optionally (E2) fillers differing from components (C) and (El),
optionally (F) plasticizers,
optionally (G) catalysts,
optionally (H) adhesion promoters,
optionally (I) water scavengers,
optionally (J) additives, and
optionally (K) adjuvants.

8. Method for producing the composition according to one or more of Claims 1 to 7 by mixing the individual components in any order.

9. Shaped article produced by crosslinking the compositions according to one or more of Claims 1 to 7.

10. Method for producing assemblies of materials wherein the composition according to one or more of Claims 1 to 7 is applied to at least one substrate and is subsequently caused to crosslink.

## Revendications

1. Matières réticulables, contenant :
(A) 100 parties en poids de composés de formule :
Y-[(CR¹₂)_{b}-SiRₐ(OR²)₃₋ₐ]ₓ (I),
dans laquelle
Y signifie un radical polymère x-valent, relié par un azote, un oxygène, un soufre ou un carbone,
les R peuvent être identiques ou différents, et représentent un radical hydrocarboné monovalent, éventuellement substitué,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle, les R² peuvent être identiques ou différents, et représentent un atome d'hydrogène ou un radical hydrocarboné monovalent, éventuellement substitué,
x est un nombre entier de 1 à 10,
les a peuvent être identiques ou différents, et représentent 0, 1 ou 2, et
les b peuvent être identiques ou différents, et représentent un nombre entier de 1 à 10,
(B) au moins 5 parties en poids de résines de silicone contenant des unités de formule :
R³_{c}(R⁴O)_{d}R⁵ₑSiO_{(4-c-d-e)/2} (II),
dans laquelle
les R³ peuvent être identiques ou différents, et signifient un atome d'hydrogène, un radical hydrocarboné aliphatique, monovalent, relié à SiC, éventuellement substitué, ou un radical hydrocarboné aliphatique, bivalent, éventuellement substitué, qui ponte deux unités de formule (II),
les R⁴ peuvent être identiques ou différents, et signifient un atome d'hydrogène ou un radical hydrocarboné monovalent, éventuellement substitué,
les R⁵ peuvent être identiques ou différents, et signifient un radical hydrocarboné aromatique, monovalent, relié à SiC, éventuellement substitué,
c signifie 0, 1, 2 ou 3,
d signifie 0, 1, 2 ou 3, et
e signifie 0, 1 ou 2,
à condition que la somme de c+d+e soit inférieure ou égale à 3, et que dans au moins 40 % des unités de formule (II), la somme c+e soit égale à 0 ou 1, et
(C) au moins 10 parties en poids de noir de carbone.

2. Matières réticulables selon la revendication 1, contenant :
(A) 100 parties en poids de composés de formule :
Y-[(CR¹₂)_{b}-SiRₐ(OR²)₃₋ₐ]ₓ (I),
dans laquelle
Y signifie un radical polymère x-valent, relié par un azote, un oxygène, un soufre ou un carbone, qui contient des polyuréthanes ou des polyoxyalkylènes en tant que chaîne polymère,
les R peuvent être identiques ou différents, et représentent un radical hydrocarboné monovalent, éventuellement substitué,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle, les R² peuvent être identiques ou différents, et représentent un atome d'hydrogène ou un radical hydrocarboné monovalent, éventuellement substitué,
x est un nombre entier de 1 à 10,
les a peuvent être identiques ou différents, et représentent 0, 1 ou 2, et
les b peuvent être identiques ou différents, et représentent un nombre entier de 1 à 10,
(B) au moins 5 parties en poids de résines de silicone contenant des unités de formule :
R³_{c}(R⁴O)_{d}R⁵ₑSiO_{(4-c-d-e)/2} (II),
dans laquelle
les R³ peuvent être identiques ou différents, et signifient un atome d'hydrogène, un radical hydrocarboné aliphatique, monovalent, relié à SiC, éventuellement substitué, ou un radical hydrocarboné aliphatique, bivalent, éventuellement substitué, qui ponte deux unités de formule (II),
les R⁴ peuvent être identiques ou différents, et signifient un atome d'hydrogène ou un radical hydrocarboné monovalent, éventuellement substitué,
les R⁵ peuvent être identiques ou différents, et signifient un radical hydrocarboné aromatique, monovalent, relié à SiC, éventuellement substitué,
c signifie 0, 1, 2 ou 3,
d signifie 0, 1, 2 ou 3, et
e signifie 0, 1 ou 2,
à condition que la somme de c+d+e soit inférieure ou égale à 3, et que dans au moins 40 % des unités de formule (II), la somme c+e soit égale à 0 ou 1, et
(C) au moins 10 parties en poids de noir de carbone.

3. Matières réticulables selon la revendication 1 ou 2, **caractérisées en ce que** des résines de silicone (B1) qui comprennent, par rapport au nombre total d'unités de formule (II), au moins 30 % d'unités de formule (II) dans lesquelles e représente la valeur 1 et c représente la valeur 0, sont utilisées en tant que composant (B).

4. Matières réticulables selon une ou plusieurs des revendications 1 à 3, **caractérisées en ce que** le composant (C) consiste en des noirs de carbone de fourneau.

5. Matières réticulables selon une ou plusieurs des revendications 1 à 4, **caractérisées en ce que** le composant (C) consiste en des noirs de carbone de fourneau ayant une surface BET, déterminée avec de l'azote selon DIN 66131, de 30 à 600 m²/g, et un indice d'huile, déterminé selon ASTM D 2414, compris entre 40 et 180 ml/100 g.

6. Matières réticulables selon une ou plusieurs des revendications 1 à 5, **caractérisées en ce qu'**il s'agit de matières contenant :
(A) 100 parties en poids de composés de formule (I),
(B) 5 à 300 parties en poids de résines de silicone contenant des unités de formule (II),
(C) 10 à 200 parties en poids de noir de carbone,
(D) 0,1 à 25 parties en poids de composés d'organosilicium contenant des unités de formule :
DₕSi(OR⁷)_{g}R⁶_{f}O_{(4-f-g-h)/2} (III),
dans laquelle
les R⁶ peuvent être identiques ou différents, et signifient un radical organique monovalent, éventuellement substitué, relié à SiC, exempt d'azote,
les R⁷ peuvent être identiques ou différents, et signifient un atome d'hydrogène ou des radicaux hydrocarbonés éventuellement substitués,
les D peuvent être identiques ou différents, et signifient un radical monovalent, relié à SiC, contenant au moins un atome d'azote non relié à un groupe carbonyle (C=O),
f signifie 0, 1, 2 ou 3,
g signifie 0, 1, 2 ou 3, et
h signifie 0, 1, 2, 3 ou 4,
à condition que la somme de f+g+h soit inférieure ou égale à 4, et qu'au moins un radical D soit présent par molécule,
(E) 10 à 1 000 parties en poids de charges,
éventuellement (F) des plastifiants,
éventuellement (G) des catalyseurs,
éventuellement (H) des promoteurs d'adhésion, éventuellement (I) des capteurs d'eau,
éventuellement (J) des additifs et
éventuellement (K) des ajouts.

7. Matières réticulables selon une ou plusieurs des revendications 1 à 6, **caractérisées en ce qu'**il s'agit de matières contenant :
(A) 100 parties en poids de composés de formule (I) avec Y représentant un radical polymère x-valent, relié par un azote, un oxygène, un soufre ou un carbone, qui contient des polyuréthanes ou des polyoxyalkylènes en tant que chaîne polymère,
(B) 10 à 200 parties en poids de résines de silicone contenant des unités de formule (II) dans lesquelles R⁵ représente un radical phényle, et qui comprennent, à chaque fois par rapport au nombre total d'unités de formule (II), au moins 70 % d'unités de formule (II) dans lesquelles e représente la valeur 1,
(C) 20 à 200 parties de noir de carbone de fourneau,
(D) 0,1 à 25 parties en poids de silanes de formule (III),
(E1) 10 à 900 parties en poids de carbonate de calcium, de carbonate de magnésium et/ou de carbonates mixtes de calcium et de magnésium,
éventuellement (E2) des charges différentes des composants (C) et (E1),
éventuellement (F) des plastifiants,
éventuellement (G) des catalyseurs,
éventuellement (H) des promoteurs d'adhésion,
éventuellement (I) des capteurs d'eau,
éventuellement (J) des additifs et
éventuellement (K) des ajouts.

8. Procédé de fabrication de la matière selon une ou plusieurs des revendications 1 à 7 par mélange des composants individuels dans un ordre quelconque.

9. Corps moulé, fabriqué par réticulation des matières selon une ou plusieurs des revendications 1 à 7.

10. Procédé de fabrication de matériaux composites, selon lequel la matière selon une ou plusieurs des revendications 1 à 7 est appliquée sur au moins un substrat, puis laissée réticuler.
